Europäisches Patentamt

European Patent Office

Office européen des brevets

(19)

(11) Veröffentlichungsnummer: **0 077 499**
**B1**

# (12) EUROPÄISCHE PATENTSCHRIFT

(45) Veröffentlichungstag der Patentschrift:
08.05.85

(21) Anmeldenummer: 82109292.1

(22) Anmeldetag: 07.10.82

(51) Int. Cl.⁴: **G 21 C 3/32**

(54) Stabhalterung für Kernreaktor-Brennelemente.

(30) Priorität: 19.10.81 DE 3141402

(43) Veröffentlichungstag der Anmeldung:
27.04.83 Patentblatt 83/17

(45) Bekanntmachung des Hinweises auf die Patenterteilung:
08.05.85 Patentblatt 85/19

(84) Benannte Vertragsstaaten:
BE FR GB IT

(56) Entgegenhaltungen:
DE - A - 2 520 234
DE - A - 2 721 869
FR - A - 2 390 805
FR - A - 2 390 806
US - A - 3 928 126

(73) Patentinhaber: INTERATOM Gesellschaft mit
beschränkter Haftung, Friedrich-Ebert-Strasse,
D-5060 Bergisch Gladbach 1 (DE)

(72) Erfinder: Wieres, Ludwig, Oppelnerstrasse 2,
D-5063 Overath (DE)
Erfinder: Schmeling, Frank, Hügelstrasse 3,
D-5226 Reichshof-Brüschermühle (DE)

(74) Vertreter: Mehl, Ernst, Dipl.-Ing. et al, Postfach 22 01 76,
D-8000 München 22 (DE)

## Beschreibung

Die vorliegende Erfindung betrifft ein Kernreaktor-Brennelement nach dem Oberbegriff des Anspruchs 1, wie es von der Anmelderin bereits früher in der DE-A-2 721 869 in zwei alternativen Ausführungsformen beschrieben worden ist. Die dort gegebenen Hinweise auf die Notwendigkeit einer leichten Montage und Demontage der einzelnen Brennstäbe aus dem Brennelement und auf die dabei zu beachtenden Bedingungen treffen auch auf die vorliegende Erfindung zu.

Aufgabe der vorliegenden Erfindung ist eine Verbesserung des bekannten Brennelementes dahingehend, daß einzelne Brennstäbe aus dem Element entfernt und in dieses wieder eingesetzt werden können, ohne daß dazu das gesamte Brennstabbündel aus seinem Hüllkasten gezogen werden müßte; das Ziehen des Brennstabes soll darüber hinaus sowohl in Richtung auf den Elementfuß als auch auf den Elementkopf möglich sein. Die Ausführbarkeit der Montage- und Demontagearbeiten mittels fernbedienter Werkzeuge, wie sie im Falle bestrahlter Brennelemente erforderlich ist, soll weiter verbessert werden, ebenso wie der Strömungswiderstand herabgesetzt werden soll, den die Stabhalterung dem durch das Element strömenden Kühlmittel entgegensetzt.

Die Lösung der Aufgabe erfolgt durch das im kennzeichnenden Teil des Anspruchs 1 genannte Merkmal. Das Einlegen der Schließbleche kann erfolgen, ohne daß dazu der Haltering aus dem Brennelementhüllkasten gezogen werden müßte. Dabei wird jedesmal eine Reihe von Brennstäben durch die besondere Ausgestaltung an ihren Enden formschlüssig befestigt bzw. wieder freigegeben. Das Ziehen eines einzelnen Brennstabes dieser Reihe ist dann in beiden Richtungen gleich gut möglich. Die benötigten Bauteile können eine fertigungstechnisch günstige einfache Form aufweisen, und die erforderlichen Bewegungen zueinander sind ohne weiteres durch fernbediente Werkzeuge ausführbar.

Im Anspruch 2 wird ein besonders günstiges Profil für die Schließbleche vorgeschlagen, das in Zusammenwirken mit der im Anspruch 1 vorgeschlagenen besonderen Ausgestaltung des Fußendes der Brennstäbe eine sichere Verriegelung desselben im Element gewährleistet, und zwar gegen Bewegungen in der einen wie der anderen Richtung.

Ein Ausführungsbeispiel der Erfindung ist in der Zeichnung dargestellt, und zwar zeigt

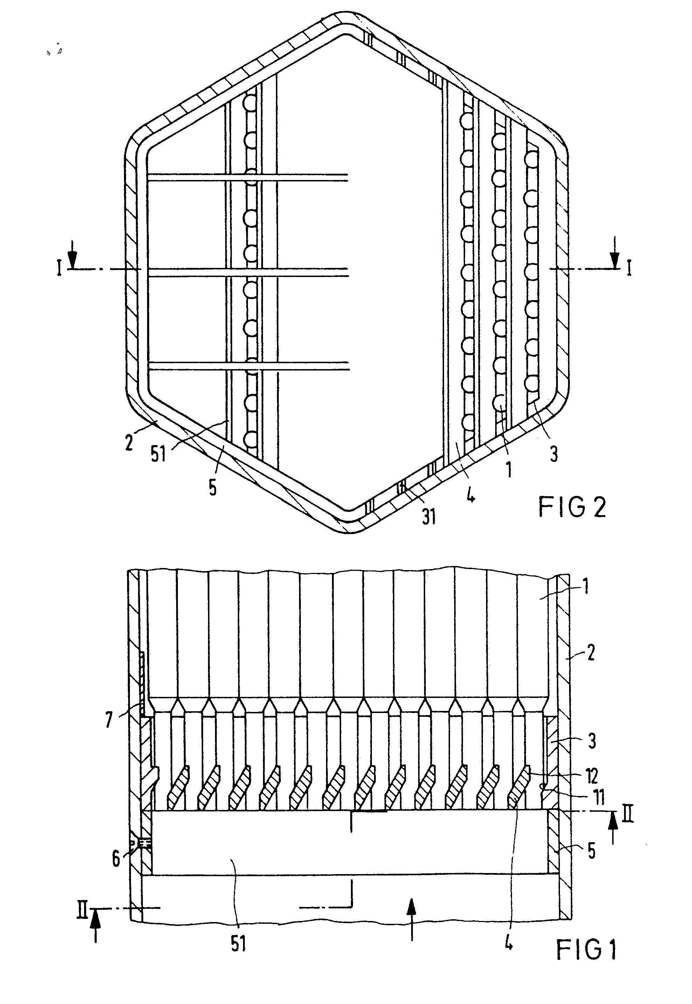

Fig. 1 einen Längsaxialschnitt durch das untere Ende des Brennelementes entsprechend der Linie I-I der Fig. und

Fig. 2 einen Querschnitt entsprechend der Linie II-II der Fig. 1.

Das Brennelement besteht aus einer Vielzahl von mit Spalt- oder Brutstoff gefüllten Brennstäben 1 großer Länge, die in bekannter, hier nicht dargestellter Weise durch Abstandshalter in einem hier dreieckigen Raster fixiert werden und innerhalb eines im Beispiel sechseckig ausgeführten Hüllkastens 2 angeordnet sind. Das Element wird durch Kühlmittel, z. B. durch flüssiges Natrium in der durch den Pfeil angedeuteten Richtung, durchströmt. Gegen ein durch diese Strömung hervorgerufenes Aufschwimmen müssen die Stäbe durch eine Halterung gesichert werden, die aus einem Haltering 3 und einer Anzahl von Lamellen 4 besteht. Diese haben einen Querschnitt in Form eines Parallelepipeds mit gebrochenen spitzen Kanten und werden in entsprechende, im Haltering 3 schräg angeordnete Nuten 31 eingelegt, indem sie zunächst mit parallel zur Element-Längsachse angeordneten Längsseiten des Querschnitts eingeschoben und anschließend so weit umgeklappt werden, daß ihre Schmalseiten parallel zur Element-Längsachse zu liegen kommen. In dieser Stellung werden sie durch einen Sicherungsring 5 festgehalten, der vom Elementfuß her gegen den Haltering 3 geschoben und beispielsweise mittels Schrauben 6 am Hüllkasten befestigt wird. Als Widerlager für den Haltering 3 dienen mehrere, über den Umfang verteilte und z. B. durch Punktschweißung mit dem Hüllkasten 2 verbundene Anschläge 7. Die in ihre Endlage gedrehten Lamellen 4 greifen in zylinderabschnittförmige, an ihrem einen Ende abgeschrägte Ausnehmung 11 bzw. 12 im Fuß der Brennstäbe 1. Die Lamellen 4 ebenso wie zur Aussteifung des Sicherungsringes 5 angeordnete Streben 51 setzen dem Kühlmittelstrom nur einen geringen Widerstand entgegen, wodurch die zu dessen Aufrechterhaltung erforderliche Pumpleistung im Kühlmittelkreislauf gering gehalten werden kann.

## Patentansprüche

1. Kernreaktor-Brennelement mit einer Vielzahl von innerhalb eines Hüllkastens (2) parallel zueinander angeordneten und gegenüber diesem festgehalterten Brennstäben (1), wobei die Brennstäbe am einen Ende Ausnehmungen (11, 12) aufweisen, die die Gestalt zylinderabschnittförmiger Abflachungen haben, in die quer zur Elementachse angeordnete Schließbleche (4) fassen, die durch einen Haltering (3) in ihrer Lage fixiert und mit diesem im Hüllkasten angeordnet sind, dadurch gekennzeichnet, daß die Schließbleche (4) einzeln unter Drehung um ihre Längsachse bei gleichzeitig hergestellten Eingriff in die Ausnehmungen (11, 12) in im Haltering (3) schräg zur Elementachse angeordnete Schlitze (31) einlegbar sind und die Ausnehmungen (11, 12) an einem Ende abgeschrägte Abflachungen aufweisen.

2. Kernreaktor-Brennelement nach Anspruch 1, dadurch gekennzeichnet, daß das Schließblech (4) einen Querschnitt etwa in Form eines Parallelepipeds mit in zur Element-Längsachse in parallele Lage bringbaren Seiten aufweist.

## Claims

1. A nuclear reactor fuel element having a plurality of fuel rods (1) which are arranged parallel to one another within a surrounding casing (2) and secured with respect to the latter, where, at one end, the fuel rods have recesses (11, 12) in the form of flats which are shaped like a section of a cylinder and into which grip locking plates (4) which are transversely arranged to the axis of the element and are held in their position by a holding ring (3) and, together with the latter, are arranged in the surrounding casing, characterised in that by rotation about their longitudinal axes with a simultaneously effected engagement into the recesses (11, 12), the locking plates (4) can be individually placed into slots (31) in the holding ring (3), which are arranged obliquely to the axis of the element, and the recesses (11, 12) have chamfered flats at one end.

2. A nucler reactor fuel element as claimed in Claim 1, characterised in that the locking plate (4) has a cross-section which approximately possesses the form of a parallelepiped with sides which can be brought into a position parallel to the longitudinal axis of the element.

## Revendications

1. Elément combustible pour réacteurs nucléaires, comprenant un grand nombre e barreaux combustibles (1) disposés parallèlement les uns aux autres dans un boîtier-canal (2) et maintenus solidement contre celui-ci, les barreaux combustibles présentant à une extrémité des évidements (11, 12) qui possèdent des méplats en forme de section de cylindre, dans lesquels s'accrochent des tôles de fermeture (4) qui sont disposées transversalement à l'axe e l'assemblage, qui sont immobilisées en leur position par un anneau de maintien (3) et qui, avec celui-ci, sont disposées dans le boîtier-canal, caractérisè en ce que les tôles de fermeture (4) peuvent être introduites individuellement, par rotation autour de leur axe longitudinal et en s'accrochant en même temps dans les évidements (11, 12), dans des fentes (31) disposées obliquement par rapport à l'axe de l'élément, les évidements (11, 12) présentant à une extrémité des méplats biseautés.

2. Elément combustible pour réacteurs nucléaires suivant la revendication 1, caractérisé en ce que la tôle de fermeture (4) présente une section transversale ayant à peu près la forme d'un parallélépipède à côtés pouvant être amenés en une position parallèle à l'axe longitudinal de l'élément.

FIG 2

FIG 1

5